# EUROPEAN PATENT APPLICATION

(11) **EP 4 783 273 A1**
(43) Date of publication of application: **29.07.2026**
(21) Application number: 24882240.5
(22) Date of filing: 15.10.2024
(51) Int. Cl.: H01M 10/04, H01G 11/10, H01G 11/52, H01G 11/78, H01M 10/0587, H01M 50/103, H01M 50/342, H01M 50/474, H01M 50/483, H01M 50/486

(54) **POWER STORAGE ELEMENT**

(30) Priority: 25.10.2023 JP 2023183499
(71) Applicant: GS Yuasa International Ltd., Kisshoin, Minami-ku, Kyoto-shi, Kyoto 601-8520 (JP)
(72) Inventor: ITO Shota, Kyoto-shi, Kyoto 601-8520 (JP)
(74) Representative: Isarpatent
(86) International application number: PCT/JP2024/036633
(87) International publication number: WO 2025/089127

(57) **Abstract**

An energy storage device according to one aspect of the present invention includes: a plurality of electrode body units each having an electrode body in which a positive electrode and a negative electrode are laminated, and an isolation layer laminated on an outermost surface of the electrode body; and a container accommodating the plurality of electrode body units and having a safety valve, in which the plurality of electrode body units adjacent to each other are in contact with each other at the isolation layers, the isolation layer includes a resin layer and an inorganic layer, and a total thickness of the isolation layers that separate the electrode bodies in the plurality of electrode body units adjacent to each other is 50 µm or more and 110 µm or less.

## Description

### TECHNICAL FIELD

The present invention relates to an energy storage device.

### BACKGROUND ART

Non-aqueous electrolyte secondary batteries typified by lithium-ion secondary batteries are often used in electronic devices such as personal computers and communication terminals, automobiles, and the like, because of their high energy density. The non-aqueous electrolyte secondary battery generally includes a pair of electrodes electrically isolated by a separator and a non-aqueous electrolyte interposed between the electrodes, and is configured to be charged and discharged through the transfer of charge-transporting ions between the two electrodes. As energy storage devices other than the non-aqueous electrolyte secondary batteries, capacitors such as lithium-ion capacitors and electric double layer capacitors, energy storage devices using an electrolyte other than a non-aqueous electrolyte, and the like have also been widely adopted.

In a usually unforeseeable usage form of an energy storage device, gas may be generated inside the energy storage device due to the high temperature of the energy storage device. In order to reduce an increase in the internal pressure of the energy storage device due to the generation of gas, a safety valve may be provided in a container of the energy storage device. Patent Literature 1 describes a battery in which a plurality of electrode groups are accommodated in an exterior member (container) and a safety valve is provided in a lid of the exterior member.

### CITATION LIST

### Patent Literature

Patent Literature 1: Japanese Unexamined Patent Application Publication No. 2016-085910

### DISCLOSURE OF INVENTION

### PROBLEMS TO BE SOLVED BY THE INVENTION

When a safety valve is operated by gas generated inside an energy storage device, an electrode body in a container of the energy storage device may be attracted to the safety valve together with the gas. At this time, since a flow path of the gas to be discharged from the safety valve is blocked by the electrode body, the gas may not be rapidly discharged to the outside of the container. In a case where a plurality of the electrode bodies are accommodated in the container of the energy storage device, the amount of gas to be generated tends to be large, and rapid discharge of the gas to the outside of the container when the safety valve is operated is particularly required. In addition, in a case where the energy storage device includes a plurality of the electrode bodies, it is desirable to insulate the electrode bodies from each other in order to suppress a short circuit or the like between the electrode bodies.

The present invention has been made in view of the above circumstances, and an object of the present invention is to provide an energy storage device provided with a safety valve for discharging gas and having a plurality of electrode bodies, by which gas can be effectively discharged at the time of operation of the safety valve while ensuring the insulating property between the plurality of electrode bodies.

### MEANS FOR SOLVING THE PROBLEMS

An energy storage device according to one aspect of the present invention includes: a plurality of electrode body units each having an electrode body in which a positive electrode and a negative electrode are laminated, and an isolation layer laminated on an outermost surface of the electrode body; and a container accommodating the plurality of electrode body units and having a safety valve, in which the plurality of electrode body units adjacent to each other are in contact with each other at the isolation layers, the isolation layer includes a resin layer and an inorganic layer, and a total thickness of the isolation layers that separate the electrode bodies in the plurality of electrode body units adjacent to each other is 50 µm or more and 110 µm or less.

### EFFECT OF THE INVENTION

An energy storage device according to one aspect of the present invention is provided with a safety valve for discharging gas and has a plurality of electrode bodies, by which gas can be effectively discharged at the time of operation of the safety valve while ensuring the insulating property between the plurality of electrode bodies.

### BRIEF DESCRIPTION OF DRAWINGS

[FIG. 1] FIG. 1 is a transparent perspective view illustrating one embodiment of an energy storage device.
[FIG. 2] FIG. 2 is a perspective view illustrating each constituent element of the energy storage device of FIG. 1.
[FIG. 3] FIG. 3 is a perspective view illustrating a schematic configuration of an electrode body unit of the energy storage device of FIG. 1.
[FIG. 4] FIG. 4 is a schematic cross-sectional view taken along a line IV-IV of the energy storage device of FIG. 1.
[FIG. 5] FIG. 5 is a schematic enlarged view of FIG. 4.
[FIG. 6] FIG. 6 is a schematic cross-sectional view illustrating a state in which two electrode body units which are welded are attracted to a safety valve.
[FIG. 7] FIG. 7 is a schematic cross-sectional view illustrating a state in which the two electrode body units which are not welded are attracted to the safety valve.
[FIG. 8] FIG. 8 is a schematic view illustrating one embodiment of an energy storage apparatus constituted by assembling a plurality of energy storage devices.

### DESCRIPTION OF EMBODIMENTS

First, an outline of an energy storage device disclosed by the present description will be described.
(1) An energy storage device according to one aspect of the present invention includes: a plurality of electrode body units each having an electrode body in which a positive electrode and a negative electrode are laminated, and an isolation layer laminated on an outermost surface of the electrode body; and a container accommodating the plurality of electrode body units and having a safety valve, in which the plurality of electrode body units adjacent to each other are in contact with each other at the isolation layers, the isolation layer includes a resin layer and an inorganic layer, and a total thickness of the isolation layers that separate the electrode bodies in the plurality of electrode body units adjacent to each other is 50 µm or more and 110 µm or less.

The energy storage device according to the above (1) is an energy storage device provided with a safety valve for discharging gas and having a plurality of electrode bodies, by which gas can be effectively discharged at the time of operation of the safety valve while ensuring the insulating property between the plurality of electrode bodies. The reason for this is presumed as follows.

In a usually unforeseeable usage form, gas may be generated inside an energy storage device due to the high temperature of the energy storage device. When a safety valve is operated by the gas, an electrode body in a container of the energy storage device may be attracted to the safety valve together with the gas. At this time, since a flow path of the gas to be discharged from the safety valve is blocked by the electrode body of the energy storage device, the gas may not be rapidly discharged to the outside of the container. On the other hand, in the energy storage device according to the above (1), since the total thickness of the isolation layers that separate the electrode bodies in the plurality of electrode body units is equal to or less than the upper limit, heat is uniformly conducted to the isolation layers at a high temperature at which the safety valve of the energy storage device is operated. Therefore, when the temperature becomes equal to or more than the melting point of a resin contained in the resin layer, the resin layer in the isolation layer is uniformly melted, and the plurality of electrode body units are easily welded to each other. Therefore, the positional deviation between the plurality of electrode body units is less likely to occur, and it is possible to prevent any one of the plurality of electrode body units from being attracted to the safety valve and a flow path of gas from being blocked. In addition, since the plurality of electrode body units are welded to each other, the plurality of electrode body units are less likely to be attracted to the safety valve. That is, the energy storage device according to the above (1) can effectively discharge the gas at the time of operation of the safety valve. Furthermore, since the isolation layer includes the inorganic layer, and the total thickness of the isolation layers is equal to or more than the lower limit, the insulating property between the electrode bodies can be ensured.

In the present invention, the "resin layer" means a layer containing a resin defined in JIS K 6900:1994 as a main constituent. Here, the "resin" means a polymer, and the "main constituent" means a constituent having the highest content on a mass basis. The "inorganic layer" means a layer containing an inorganic compound as a main constituent. The content of the resin in the resin layer is preferably 50% by mass or more, more preferably 70% by mass or more, still more preferably 90% by mass or more, yet still more preferably 95% by mass or more, and particularly preferably 99% by mass or more. The content of the inorganic compound in the inorganic layer is preferably 50% by mass or more, more preferably 70% by mass or more, still more preferably 90% by mass or more, yet still more preferably 95% by mass or more, and particularly preferably 99% by mass or more. Moreover, in the present invention, the "thickness" means an average value of thicknesses measured at any five points.

(2) In the energy storage device according to the above (1), the electrode body may be a wound electrode body having a shape including two curved surface portions and a pair of wide surface portions located between the two curved surface portions, and the plurality of electrode body units adjacent to each other may be in contact with each other at the isolation layers laminated on the wide surface portions.

In the energy storage device according to the above (2), since the plurality of electrode body units are in contact with each other at the isolation layers laminated on the wide surface portions, it is easy to secure an area in which the plurality of electrode body units are welded to each other at a high temperature at which the safety valve of the energy storage device is operated. Therefore, the positional deviation between the plurality of electrode body units is much less likely to occur at a high temperature at which the safety valve of the energy storage device is operated, and the gas can be discharged more effectively at the time of operation of the safety valve.

(3) In the energy storage device according to the above (2), at least one of the two curved surface portions may face an inner surface of the container in which the safety valve is arranged.

In the energy storage device according to the above (3), since at least one of the two curved surface portions faces the inner surface of the container in which the safety valve is arranged, in the curved surface portion, curved surface-shaped portions of the plurality of electrode body units, which are formed by laminating the isolation layers, are adjacent to each other and face the safety valve. In this manner, the curved surface-shaped portions of the plurality of electrode body units are adjacent to each other, so that a space is easily formed along a curved surface shape between the safety valve and the curved surface-shaped portions, and thus a space can be easily secured between the safety valve and the electrode body units. Therefore, the gas can be discharged more effectively at the time of operation of the safety valve.

(4) In the energy storage device according to the above (3), the safety valve may be located on an extension surface of a contact surface between the plurality of electrode body units adjacent to each other.

The energy storage device according to the above (4) can more effectively discharge the gas at the time of operation of the safety valve. The reason for this is presumed as follows. The extension surface of the contact surface between the plurality of electrode body units adjacent to each other is located in the middle of the curved surface-shaped portions of the electrode body units adjacent to each other. A relatively large space is easily secured between the safety valve and the electrode body units in the middle of the curved surface-shaped portions. Therefore, the gas can be discharged more effectively at the time of operation of the safety valve.

(5) In the energy storage device according to any one of the above (1) to (4), a thickness of the inorganic layer may be 10% or more and 40% or less of a thickness of the isolation layer.

In the energy storage device according to the above (5), since the thickness of the inorganic layer is within the above range, the plurality of electrode body units can be more reliably welded to each other when the temperature becomes equal to or more than the melting point of the resin contained in the resin layer at the time of operation of the safety valve, while more ensuring the insulating property between the electrode bodies of the plurality of electrode body units.

When there are a plurality of inorganic layers, the "thickness of the inorganic layer" described above means a total thickness of the inorganic layers. The same applies to the "thickness of the isolation layer."

Hereinafter, an energy storage device, an energy storage apparatus, a method for producing an energy storage device according to one embodiment of the present invention and other embodiments will be described in detail. The names of constituent members (constituent elements) used in the embodiments may be different from the names of constituent members (constituent elements) used in the background art. In the following description, although the terms "up," "down," "left," "right," and the like may be used, these terms are merely used as examples for indicating directions, and are not intended to limit the directions in the usage form.

### [Energy storage device]

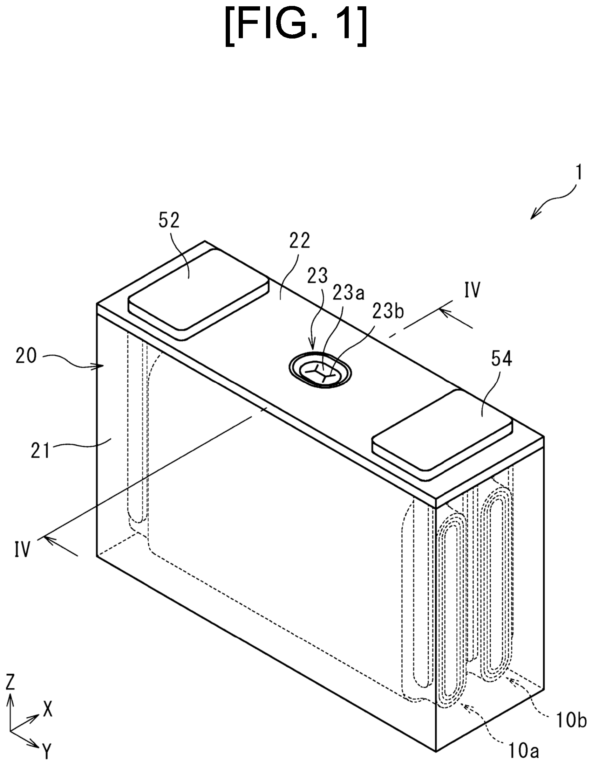

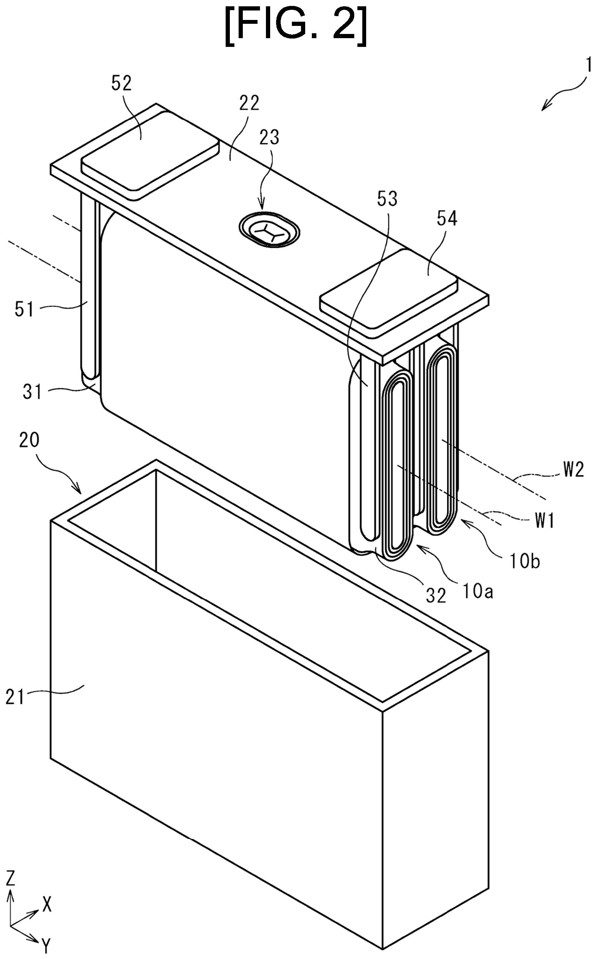

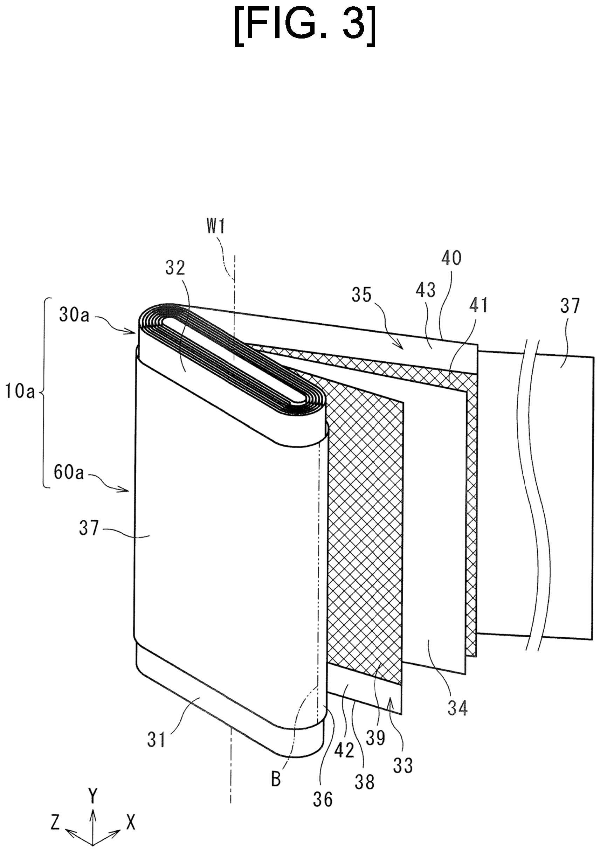

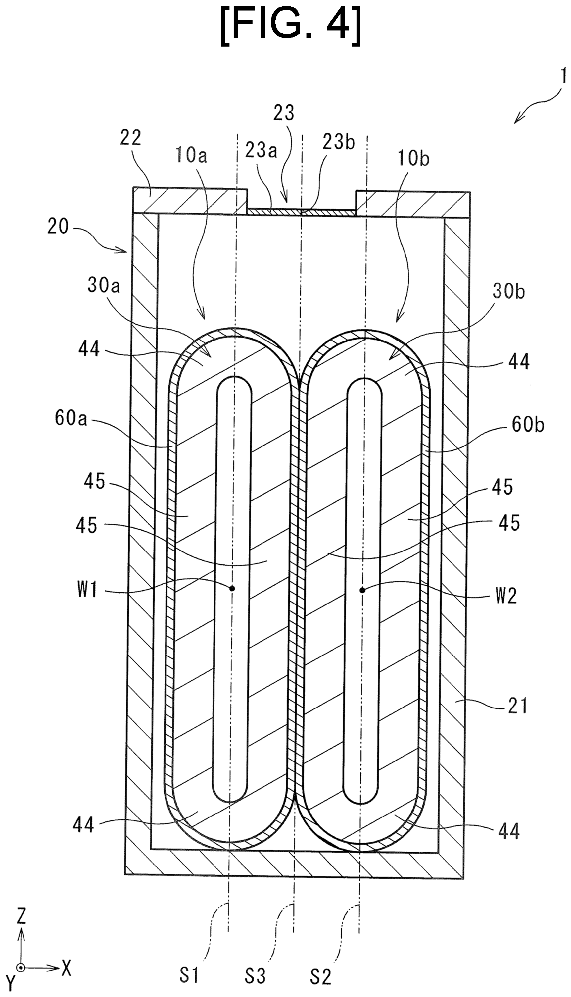

As illustrated in FIGS. 1 and 2, an energy storage device 1 includes two adjacent electrode body units 10a, 10b and a container 20. As illustrated in FIG. 4, each of the two electrode body units 10a, 10b has an electrode body 30a (30b) and an isolation layer 60a (60b) laminated on the outermost surface of the electrode body 30a (30b). The two adjacent electrode body units 10a, 10b are in contact with each other at the isolation layers 60a, 60b. The container 20 accommodates the two electrode body units 10a, 10b and has a safety valve 23. As illustrated in FIG. 3, the electrode body 30a has a positive electrode terminal 31 and a negative electrode terminal 32. As illustrated in FIG. 2, the positive electrode terminal 31 is electrically connected to a positive electrode external terminal 52 provided outside the container 20 via a positive electrode-side connection member (positive electrode lead) 51. The negative electrode terminal 32 is electrically connected to a negative electrode external terminal 54 provided outside the container 20 via a negative electrode-side connection member (negative electrode lead) 53. Moreover, the energy storage device 1 includes an electrolytic solution (not illustrated) accommodated in the container 20. A part of the electrolytic solution exists in a state of being impregnated in positive electrodes, negative electrodes, and separators constituting the electrode bodies 30a, 30b.

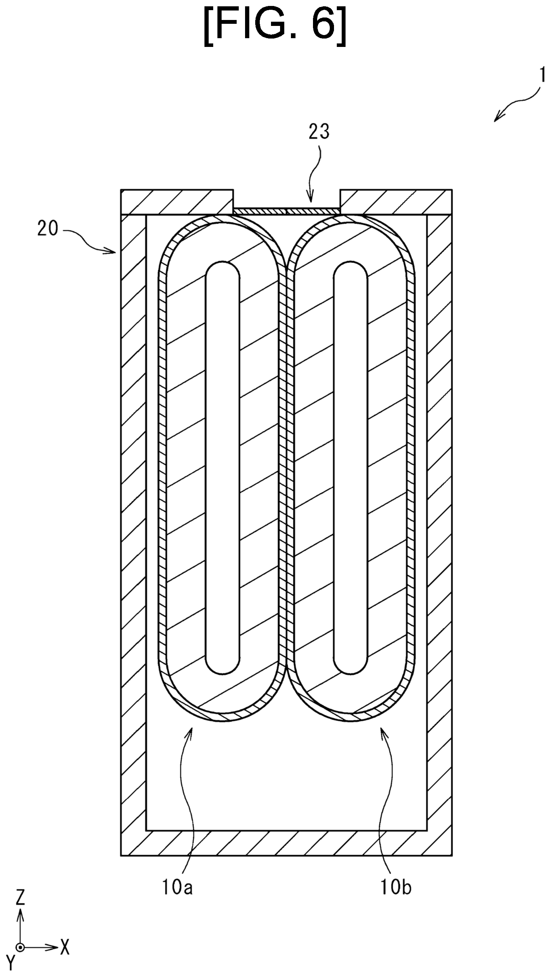

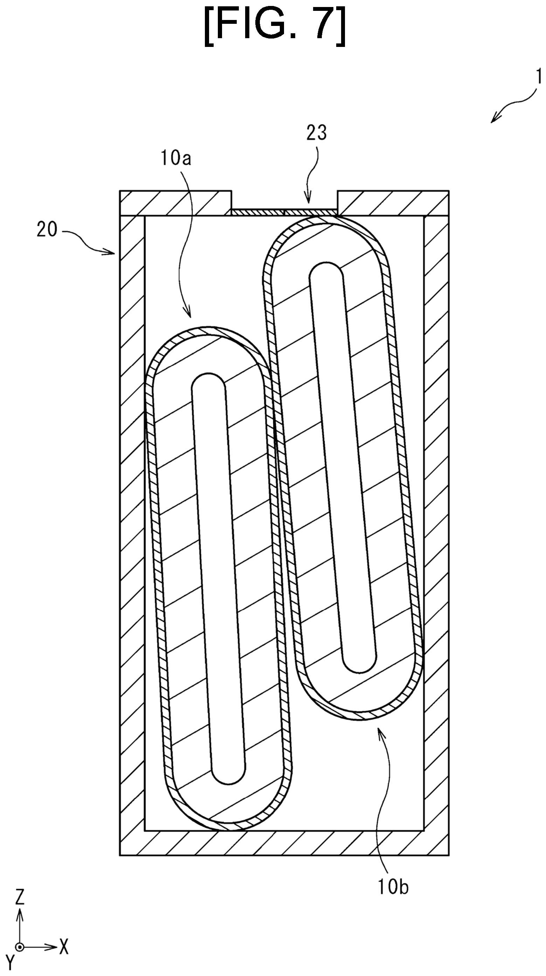

In the energy storage device 1, the two electrode body units 10a, 10b can be easily welded to each other at the isolation layers 60a, 60b at a high temperature at which the safety valve 23 is operated. When the two electrode body units 10a, 10b are welded to each other, the two electrode body units 10a, 10b are less likely to be attracted to the safety valve 23, and a flow path of gas can be prevented from being blocked. In addition, even when the two electrode body units 10a, 10b are attracted to the safety valve 23, the positional deviation between the two electrode body units 10a, 10b can be suppressed, and the flow path of gas can be prevented from being blocked by one electrode body unit 10a (10b). This will be schematically described with reference to FIGS. 6 and 7. If the electrode body units 10a, 10b are welded to each other when the safety valve 23 is operated, as illustrated in FIG. 6, the two electrode body units 10a, 10b are integrally attracted to the safety valve 23, and thus a space existing between the two electrode body units 10a, 10b (in FIG. 6, a space along curved surface-shaped portions of the two electrode body units 10a, 10b facing the safety valve 23) secures the flow path of gas to be discharged from the safety valve 23. On the other hand, if the electrode body units 10a, 10b are not welded to each other or are not sufficiently welded to each other when the safety valve 23 is operated, as illustrated in FIG. 7, one of the two electrode body units 10a, 10b can be independently attracted to the safety valve 23, and thus the flow path of gas to be discharged from the safety valve 23 is easily blocked.

### <Electrode body unit>

In the present embodiment, as illustrated in FIG. 4, each of the two electrode body units 10a, 10b has the electrode body 30a (30b), which is a flat wound electrode body, and the isolation layer 60a (60b), which surrounds the electrode body 30a (30b) along the winding direction thereof. The two isolation layers 60a, 60b insulate the two electrode bodies 30a, 30b of the two adjacent electrode body units 10a, 10b from each other.

### (Electrode body)

In the present embodiment, the two electrode bodies 30a, 30b of the two electrode body units 10a, 10b have the same configuration. Therefore, hereinafter, one electrode body 30a will be described, and description of an other electrode body 30b will be omitted. As illustrated in FIG. 3, the electrode body 30a is formed by winding a strip-shaped negative electrode 35, a strip-shaped first separator 34, a strip-shaped positive electrode 33, and a strip-shaped second separator 36 in a longitudinal direction in a state in which they are laminated in this order. In FIGS. 2 and 3, the dash-dot line denoted by the code W1 indicates a winding axis of the electrode body 30a. The winding axis W1 is a virtual axis. The electrode body 30a is arranged such that the winding axis W1 is parallel to a horizontal direction (Y-axis direction in FIGS. 2 and 3). In the energy storage device 1, the winding axis W1 of the electrode body 30a is parallel to a bottom surface of the container 20 (refer to FIG. 2). In addition, as illustrated in FIG. 4, the electrode body 30a has two curved surface portions 44 and a pair of wide surface portions 45 located between the two curved surface portions 44. One of the two curved surface portions 44 faces a lid body 22 of the container 20 to be described below, and an other faces the bottom surface of the container 20. One of the pair of wide surface portions 45 faces a side surface (a side surface having the largest area) of the container 20, and an other faces the wide surface portion 45 of the electrode body 30b of the adjacent electrode body unit 10b.

The positive electrode 33 has a strip-shaped positive electrode substrate 38 and positive electrode active material layers 39 respectively laminated on both surfaces of the positive electrode substrate 38. The negative electrode 35 has a strip-shaped negative electrode substrate 40 and negative electrode active material layers 41 respectively laminated on both surfaces of the negative electrode substrate 40. The positive electrode substrate 38 and the negative electrode substrate 40 are conductive substrates such as metal foils. Details of the constituent elements such as the positive electrode 33 and the negative electrode 35 will be described below.

In the electrode body 30a, the positive electrode 33 and the negative electrode 35 are wound via the separators 34, 36 so as to be shifted from each other in a direction of the winding axis W1. In addition, the positive electrode 33 has a positive electrode active material layer non-laminated portion 42 in which the positive electrode active material layer 39 is not laminated, at one end (end portion on the lower side in FIG. 3) in the direction of the winding axis W1. In addition, the negative electrode 35 has a negative electrode active material layer non-laminated portion 43 in which the negative electrode active material layer 41 is not laminated, at an other end (end portion on the upper side in FIG. 3) in the direction of the winding axis W1. The positive electrode terminal 31 is formed by the exposed positive electrode substrate 38 (positive electrode active material layer non-laminated portion 42), and the negative electrode terminal 32 is formed by the exposed negative electrode substrate 40 (negative electrode active material layer non-laminated portion 43). As described above, in the flat wound electrode body 30a, the positive electrode terminal 31 and the negative electrode terminal 32 are respectively located at both end portions (both end portions in the direction of the winding axis W1 and the Y-axis direction).

### (Isolation layer)

In the present embodiment, the two isolation layers 60a, 60b of the two electrode body units 10a, 10b have the same configuration. Therefore, hereinafter, one isolation layer 60a will be described, and description of an other isolation layer 60b will be omitted. In the present embodiment, a strip-shaped member is wound around the electrode body 30a along the winding direction of the electrode body 30a, so that the isolation layer 60a is formed. More specifically, a separator extension portion 37 connected to an end portion of the second separator 36 in the longitudinal direction is wound around and laminated on an outer periphery of the electrode body 30a, so that the isolation layer 60a is formed (refer to FIG. 3). Still more specifically, the second separator 36 and the separator extension portion 37 are integrated to constitute one strip-shaped member. In this manner, the second separator 36 and the separator extension portion 37 constituting the isolation layer 60a are integrated to constitute one strip-shaped member, so that the productivity of the energy storage device 1 can be enhanced. In FIG. 3, the dash-double-dot line denoted by the code B indicates a boundary between the second separator 36 and the separator extension portion 37. The boundary B is a virtual line, and is a straight line parallel to the Y axis in the present embodiment. In addition, the second separator 36 is a portion of the strip-shaped member wound inside the outermost peripheral portion of the electrode (the outermost peripheral portion of the positive electrode 33 or the negative electrode 35) when the strip-shaped member is wound, and the separator extension portion 37 is a portion of the strip-shaped member wound outside the outermost peripheral portion of the electrode when the strip-shaped member is wound.

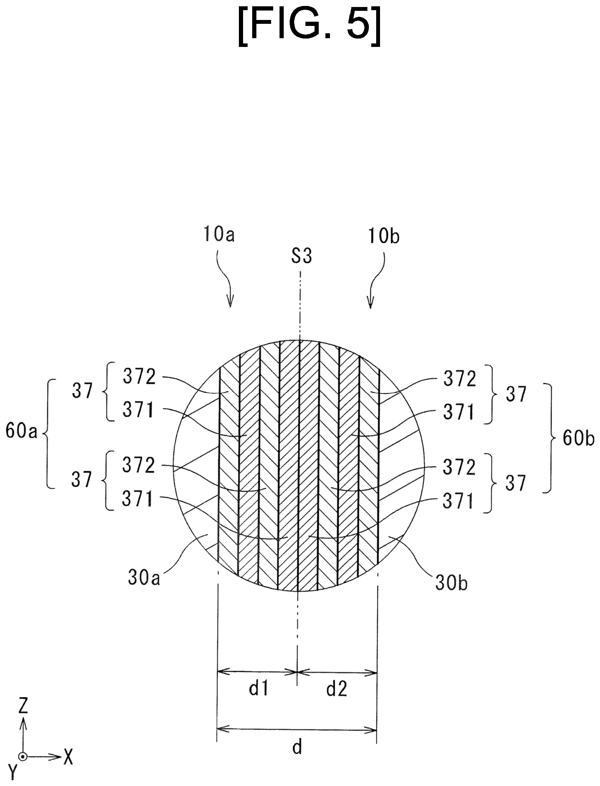

As illustrated in FIG. 5, the separator extension portion 37 includes a resin layer 371 and an inorganic layer 372 laminated on the resin layer 371. That is, the isolation layer 60a formed by the separator extension portion 37 has the resin layer 371 and the inorganic layer 372. FIG. 5 illustrates, as an example, the isolation layer 60a formed by winding the separator extension portion 37 twice. That is, in this example, the isolation layer 60a has the two-layer separator extension portion 37, and has two resin layers 371 and two inorganic layers 372. In addition, the resin layer 371 is located on the outermost surface of the isolation layer 60a. Since the resin layer 371 is located on the outermost surface of the isolation layer 60a as described above, when the temperature of the energy storage device 1 becomes high to the extent that the safety valve 23 is operated, the electrode body unit 10a having the isolation layer 60a can be easily welded to the adjacent electrode body unit 10b.

As illustrated in FIG. 4, the two adjacent electrode body units 10a, 10b are in contact with each other at the isolation layers 60a, 60b laminated on the wide surface portions 45 of the two electrode bodies 30a, 30b (in the present embodiment, portions of the isolation layers 60a, 60b laminated on the wide surface portions 45). In addition, as illustrated in FIG. 5, the two adjacent electrode body units 10a, 10b are in contact with each other at the resin layers 371 located on the outermost surfaces of the isolation layers 60a, 60b. At a high temperature at which the safety valve 23 of the energy storage device 1 is operated, the resin layers 371 which are not located on the outermost surfaces of the isolation layers 60a, 60b may also melt and exude to the surfaces of the electrode body units 10a, 10b, and thus contribute to the welding of the two electrode body units 10a, 10b.

Examples of the shape of the resin layer 371 of the separator extension portion 37 include a woven fabric, a non-woven fabric, and a porous resin film. Among the above shapes, a porous resin film is preferable from the viewpoint of strength. The resin layer 371 contains a resin. From the viewpoint of ensuring the insulating property between the electrode bodies 30a, 30b of the adjacent electrode body units 10a, 10b, for example, polyolefins such as polyethylene and polypropylene, polyimides, aramids, and the like are preferable, and polyolefins are more preferable as the resin constituting the resin layer 371. In addition, by using the above-described materials as the resin constituting the resin layer 371, the adjacent electrode body units 10a, 10b can be easily welded to each other at a high temperature at which the safety valve 23 of the energy storage device 1 is operated. As the resin constituting the resin layer 371, a material obtained by compositing these resins may be used.

The lower limit of the melting point of the resin constituting the resin layer 371 is preferably 120°C, more preferably 150°C, still more preferably 180°C, yet still more preferably 200°C, and particularly preferably 220°C. On the other hand, the upper limit of the melting point of the resin constituting the resin layer 371 is preferably 250°C, more preferably 240°C, and still more preferably 230°C. When the melting point of the resin constituting the resin layer 371 is set to be equal to or more than the lower limit, the insulating property between the electrode bodies 30a, 30b of the adjacent electrode body units 10a, 10b is easily ensured in a normal usage form of the energy storage device 1. In addition, when the melting point of the resin constituting the resin layer 371 is set to be equal to or less than the upper limit, the adjacent electrode body units 10a, 10b can be easily welded to each other at a high temperature at which the safety valve 23 of the energy storage device 1 is operated.

The inorganic layer 372 of the separator extension portion 37 includes an inorganic compound. The inorganic compound of the inorganic layer 372 may be in the form of particles. The inorganic layer 372 includes, for example, particles of an inorganic compound and a binder. The inorganic layer 372 is formed by, for example, applying a mixture of particles of an inorganic compound and a binder onto the resin layer 371 and then performing heat treatment. The inorganic compound included in the inorganic layer preferably has a mass decrease of 5% or less when heated from room temperature to 500°C in an air atmosphere at 1 atm, and more preferably has a mass decrease of 5% or less when heated from room temperature to 800°C. Examples of the inorganic compound include oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources such as talc, montmorillonite, boehmite, zeolite, apatite, kaolin, mullite, spinel, olivine, sericite, bentonite, and mica or synthetic substances thereof. As the inorganic compound, a simple substance or a composite of these substances may be used alone, or two or more kinds thereof may be used in mixture. Among these inorganic compounds, from the viewpoint of ensuring the insulating property between the electrode bodies 30a, 30b of the adjacent electrode body units 10a, 10b, silicon oxide, aluminum oxide, or aluminosilicate is preferable, and aluminum oxide is more preferable.

The porosity of the second separator 36 and the separator extension portion 37 is preferably 80% by volume or less from the viewpoint of strength, and is preferably 20% by volume or more from the viewpoint of discharge performance. Here, the "porosity" is a value based on volume, and means a value measured by a mercury porosimeter.

The lower limit of a ratio of a total thickness of the inorganic layers 372 to a total thickness of the isolation layers 60a, 60b (a ratio of a thickness of the inorganic layer 372 to a thickness of one isolation layer 60a (60b)) is preferably 10%, more preferably 15%, and still more preferably 20%. On the other hand, the upper limit of the ratio of the total thickness of the inorganic layers 372 to the total thickness of the isolation layers 60a, 60b is preferably 40%, more preferably 35%, and still more preferably 30%. When the ratio is equal to or more than the lower limit, the insulating property between the electrode bodies 30a, 30b of the adjacent electrode body units 10a, 10b can be easily ensured. In addition, when the ratio is equal to or less than the upper limit, the total thickness of the inorganic layers 372 can be set in an appropriate range with respect to a total thickness of the resin layers 371, and the adjacent electrode body units 10a, 10b can be easily welded to each other at a high temperature at which the safety valve 23 of the energy storage device 1 is operated. The ratio of the total thickness of the inorganic layers 372 to the total thickness of the isolation layers 60a, 60b may be equal to or more than any of the lower limits described above and equal to or less than any of the upper limits described above.

The lower limit of a ratio of the total thickness of the resin layers 371 to the total thickness of the isolation layers 60a, 60b (a ratio of a thickness of the resin layer 371 to the thickness of one isolation layer 60a (60b)) is preferably 60%, more preferably 65%, and still more preferably 70%. On the other hand, the upper limit of the ratio of the total thickness of the resin layers 371 to the total thickness of the isolation layers 60a, 60b is preferably 90%, more preferably 85%, and still more preferably 80%. When the ratio is equal to or more than the lower limit, the adjacent electrode body units 10a, 10b can be easily welded to each other at a high temperature at which the safety valve 23 of the energy storage device 1 is operated. In addition, when the ratio is equal to or less than the upper limit, the total thickness of the resin layers 371 can be set in an appropriate range with respect to the total thickness of the inorganic layers 372, and the insulating property between the electrode bodies 30a, 30b of the adjacent electrode body units 10a, 10b can be easily ensured. The ratio of the total thickness of the resin layers 371 to the total thickness of the isolation layers 60a, 60b may be equal to or more than any of the lower limits described above and equal to or less than any of the upper limits described above.

The lower limit of a ratio of the total thickness of the resin layers 371 to the total thickness of the inorganic layers 372 (a ratio of the thickness of the resin layer 371 to the thickness of the inorganic layer 372 in one isolation layer 60a (60b)) is preferably 1.5, more preferably 2.0, and still more preferably 2.2. On the other hand, the upper limit of the ratio of the total thickness of the resin layers 371 to the total thickness of the inorganic layers 372 is preferably 9.0, more preferably 6.0, and still more preferably 3.0. When the ratio is equal to or more than the lower limit, the adjacent electrode body units 10a, 10b can be easily welded to each other at a high temperature at which the safety valve 23 of the energy storage device 1 is operated. In addition, when the ratio is equal to or less than the upper limit, the insulating property between the electrode bodies 30a, 30b of the adjacent electrode body units 10a, 10b can be easily ensured. The ratio of the total thickness of the resin layers 371 to the total thickness of the inorganic layers 372 may be equal to or more than any of the lower limits described above and equal to or less than any of the upper limits described above.

As illustrated in FIG. 4, in the two adjacent electrode body units 10a, 10b, the two electrode bodies 30a, 30b are separated from each other by the two isolation layers 60a, 60b. As illustrated in FIG. 5, in the present embodiment, a total thickness d of the isolation layers 60a, 60b that separate the electrode bodies 30a, 30b from each other is a sum of a thickness d1 of the isolation layer 60a of the electrode body unit 10a and a thickness d2 of the isolation layer 60b of the electrode body unit 10b. The lower limit of the total thickness d of the isolation layers 60a, 60b that separate the electrode bodies 30a, 30b from each other is 50 µm, more preferably 55 µm, and still more preferably 60 µm. On the other hand, the upper limit of the total thickness d of the isolation layers 60a, 60b that separate the electrode bodies 30a, 30b from each other is 110 µm, more preferably 105 µm, and still more preferably 100 µm. When the total thickness d of the isolation layers 60a, 60b is equal to or more than the lower limit, the insulating property between the electrode bodies 30a, 30b of the adjacent electrode body units 10a, 10b can be more easily ensured. In addition, when the total thickness d of the isolation layers 60a, 60b is equal to or less than the upper limit, heat is likely to be uniformly conducted to the isolation layers 60a, 60b, and the adjacent electrode body units 10a, 10b can be easily welded to each other at a high temperature at which the safety valve 23 of the energy storage device 1 is operated. The total thickness d of the isolation layers 60a, 60b that separate the electrode bodies 30a, 30b from each other may be equal to or more than any of the lower limits described above and equal to or less than any of the upper limits described above. In the present embodiment, the thickness of the isolation layers 60a, 60b can be adjusted by, for example, changing the number of times the separator extension portion 37 is wound around the electrode bodies 30a, 30b. The thickness of the second separator 36 and the one-layer separator extension portion 37 may be 10 µm or more and 40 µm or less, or may be 15 µm or more and 30 µm or less.

### <Container>

The container 20 accommodates the two electrode body units 10a, 10b and an electrolytic solution. The container 20 has a rectangular parallelepiped shape, and as illustrated in FIG. 2, includes a container main body 21 whose upper portion (upper side in FIG. 2) is opened, and the lid body 22 which is a plate-like member for closing the opening of the container main body 21. The positive electrode external terminal 52 and the negative electrode external terminal 54 are attached to the outer surface of the lid body 22 via an insulating gasket or the like (not illustrated). In addition, the safety valve 23 is provided at the center portion of the lid body 22. The safety valve 23 may be provided so as to be located between the positive electrode external terminal 52 and the negative electrode external terminal 54. The lid body 22 may be further provided with a liquid injection port or the like.

The container 20 is made of metal. The container 20 may be made of, for example, aluminum or stainless steel, and is preferably made of aluminum. The use of the container made of aluminum is advantageous in that the weight can be reduced. "Made of aluminum" includes not only "made of pure aluminum" but also "made of an aluminum alloy." The outer surface of the metal container 20 may be coated with a material other than metal by coating or the like.

In the container 20, after the two electrode body units 10a, 10b are accommodated therein, the container main body 21 and the lid body 22 are welded or the like. Thereafter, an electrolytic solution is injected into the container 20 from a liquid injection port or the like, and the container 20 is sealed. As described above, the container 20 has a structure for sealing the inside. In a usually unforeseeable usage form of the energy storage device 1, gas may be generated inside the energy storage device 1 due to the high temperature of the energy storage device 1. Since the container 20 has a structure for sealing the inside, the internal pressure of the energy storage device 1, more specifically, the pressure inside the container 20 can be increased when the above-described gas is generated.

The safety valve 23 is a valve provided to open and discharge gas when the gas is generated in the container 20 and the pressure inside the container 20 is increased. The safety valve 23 may be referred to as a gas discharge valve, a pressure release valve, or the like. The safety valve 23 includes a weakened portion 23a formed by thinning a thickness of a part of the lid body 22, and a groove portion 23b formed so as to cut into the weakened portion 23a. As illustrated in FIG. 1, in the present embodiment, the weakened portion 23a has an elliptical planar shape. The groove portion 23b has a shape in which two grooves having different directions are connected to each end of one groove, that is, a planar shape in which two Y shapes are connected to each other. Accordingly, the weakened portion 23a is easily broken at the connecting portions of the grooves. Therefore, when a predetermined pressure acts on the safety valve 23 from the inside of the container 20, the weakened portion 23a is broken at the groove portion 23b, and the member of the weakened portion 23a around the groove portion 23b is opened toward the outside of the container 20 to form an opening as a pressure relief hole. The pressure at which the safety valve 23 opens can be controlled by the shape of the weakened portion 23a at the weakened portion 23a, the thickness of the member around the groove portion 23b of the weakened portion 23a, the shape of the groove portion 23b, the depth of the groove portion 23b, and the like. The structure of the safety valve 23 is not limited to the above-described structure, and a well-known structure configured to open when the pressure inside the container 20 is increased to decrease the pressure inside the container 20 can be adopted.

As described above, one of the two curved surface portions 44 of the electrode body 30a (30b) faces the lid body 22 of the container 20. That is, the curved surface portion 44 and the inner surface of the container 20 in which the safety valve 23 is arranged face each other (refer to FIG. 4). As described above, since the curved surface portion 44 and the inner surface of the container 20 in which the safety valve 23 is arranged face each other, the curved surface-shaped portion of the electrode body unit 10a (10b) is easily attracted to the safety valve 23 when the safety valve 23 is operated. As illustrated in FIG. 4, in the present embodiment, the two curved surface-shaped portions of the two electrode body units 10a, 10b are adjacent to each other and face the safety valve 23. Therefore, a space along a curved surface shape is formed between the safety valve 23 and the two adjacent curved surface-shaped portions of the two electrode body units 10a, 10b. Accordingly, even if the electrode body units 10a, 10b are attracted to the safety valve 23 when the safety valve 23 is operated, as illustrated in FIG. 6, a space for gas discharge can be easily secured between the two electrode body units 10a, 10b and the safety valve 23.

During normal operation of the energy storage device 1, the safety valve 23 is located between a virtual plane S1 passing through the winding axis W1 of one electrode body 30a and parallel to the wide surface portion 45 of the electrode body 30a and a virtual plane S2 passing through a winding axis W2 of an other electrode body 30b and parallel to the wide surface portion 45 of the electrode body 30b (refer to FIG. 4). That is, the weakened portion 23a and the groove portion 23b of the safety valve 23 are located between the two virtual planes S1, S2. The weakened portion 23a and the groove portion 23b of the safety valve 23 are not located on the two virtual planes S1, S2. As described above, since the safety valve 23 is located between the two virtual planes S1, S2, even if the electrode body units 10a, 10b are attracted to the safety valve 23 when the safety valve 23 is operated, as illustrated in FIG. 6, a space for gas discharge can be more easily secured between the two electrode body units 10a, 10b and the safety valve 23.

During normal operation of the energy storage device 1, the safety valve 23 is located on an extension surface S3 of a contact surface between the two adjacent electrode body units 10a, 10b (refer to FIG. 4). More specifically, the weakened portion 23a and the groove portion 23b of the safety valve 23 are located on the extension surface S3 of the contact surface between the two adjacent electrode body units 10a, 10b. As described above, since the safety valve 23 is located on the extension surface S3, even if the electrode body units 10a, 10b are attracted to the safety valve 23 when the safety valve 23 is operated, as illustrated in FIG. 6, a space for gas discharge can be more easily secured between the two electrode body units 10a, 10b and the safety valve 23.

Hereinafter, a positive electrode, a negative electrode, a separator, and an electrolytic solution in the energy storage device according to one embodiment of the present invention will be described in detail.

### (Positive electrode)

As described above, the positive electrode has a positive electrode substrate and positive electrode active material layers laminated on both surfaces of the positive electrode substrate. The positive electrode may further have an intermediate layer provided between the positive electrode substrate and the positive electrode active material layer. In addition, a positive electrode in which the positive electrode active material layer is laminated on only one surface of the positive electrode substrate can also be used.

The positive electrode substrate has conductivity. Whether or not the positive electrode substrate has "conductivity" is determined on the basis of a volume resistivity measured in conformity with JIS H 0505:1975, with 10⁻² Ω·cm being assumed as a threshold value. As the material of the positive electrode substrate, a metal such as aluminum, titanium, tantalum, or stainless steel, or an alloy thereof is used. Among the above, aluminum or an aluminum alloy is preferable from the viewpoint of potential resistance, high conductivity, and cost. Examples of the positive electrode substrate include a foil, a vapor-deposited film, a mesh, and a porous material, and a foil is preferable from the viewpoint of cost. Therefore, an aluminum foil or an aluminum alloy foil is preferable as the positive electrode substrate. Examples of the aluminum or the aluminum alloy include A1085, A3003, and A1N30 specified in JIS H 4000:2014 or JIS H 4160:2006.

The average thickness of the positive electrode substrate is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive electrode substrate is set to be within the above range, the energy density per volume of the energy storage device can be increased while increasing the strength of the positive electrode substrate.

The intermediate layer is a layer arranged between the positive electrode substrate and the positive electrode active material layer. As the intermediate layer contains a conductive agent such as carbon particles, contact resistance between the positive electrode substrate and the positive electrode active material layer is reduced. The configuration of the intermediate layer is not particularly limited, and contains, for example, a binder and a conductive agent.

The positive electrode active material layer contains a positive electrode active material. The positive electrode active material layer contains, as necessary, optional constituents such as a conductive agent, a binder, a thickener, and a filler.

The positive electrode active material can be appropriately selected from known positive electrode active materials. As the positive electrode active material for a lithium-ion secondary battery, a material capable of occluding and releasing lithium ions is usually used. Examples of the positive electrode active material include lithium transition metal composite oxides having an α-NaFeO₂-type crystal structure, lithium transition metal composite oxides having a spinel-type crystal structure, polyanion compounds, chalcogen compounds, and sulfur. Examples of the lithium transition metal composite oxides having an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-γ), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-γ), Li[LiₓNi_{γ}Mn_{β}Co_{(1-x-γ-β)}]O₂ (0 ≤ x < 0.5, 0 < γ, 0 < β, 0.5 < γ+β < 1, 0 < 1-x-γ-β), and Li[LiₓNi_{γ}Co_{β}Al_{(1-x-γ-β)}]O₂ (0 ≤ x < 0.5, 0 < γ, 0 < β, 0.5 < γ+β < 1, 0 < 1-x-γ-β). Examples of the lithium transition metal composite oxides having a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogen compounds include titanium disulfide, molybdenum disulfide, and molybdenum dioxide. Atoms or polyanions in these materials may be partially substituted with atoms or anion species of other elements. The surfaces of these materials may be coated with other materials. In the positive electrode active material layer, one of these materials may be used alone, or two or more kinds thereof may be used in mixture.

The positive electrode active material is usually in the form of particles (powder). The average particle size of the positive electrode active material is preferably, for example, 0.1 µm or more and 20 µm or less. When the average particle size of the positive electrode active material is set to be equal to or more than the lower limit, the positive electrode active material is easily produced or handled. When the average particle size of the positive electrode active material is set to be equal to or less than the upper limit, the electron conductivity of the positive electrode active material layer is improved. When a composite of the positive electrode active material and another material is used, the average particle size of the composite is regarded as the average particle size of the positive electrode active material. The term "average particle size" means a value at which a volume-based cumulative distribution calculated in accordance with JIS Z 8819-2:2001 is 50% based on a particle size distribution measured by a laser diffraction and scattering method for a diluted solution obtained by diluting particles with a solvent in accordance with JIS Z 8825:2013.

In order to obtain powder having a predetermined particle size, a pulverizer, a classifier, or the like is used. Examples of a method of pulverization include a method using a mortar, a ball mill, a sand mill, a vibration ball mill, a planetary ball mill, a jet mill, an opposed jet mill, a swirling airflow jet mill, a sieve, or the like. In performing the pulverization, wet pulverization in which water or an organic solvent such as hexane is present can also be used. As a method of classification, a sieve, an air classifier, or the like is used as necessary in both a dry method and a wet method.

The content of the positive electrode active material in the positive electrode active material layer is preferably 50% by mass or more and 99% by mass or less, more preferably 70% by mass or more and 98% by mass or less, and still more preferably 80% by mass or more and 95% by mass or less. When the content of the positive electrode active material is set to be within the above range, both high energy density and productivity of the positive electrode active material layer can be achieved.

The conductive agent is not particularly limited as long as it is a material having conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and Ketjen black. Examples of the graphene-based carbon include graphene, carbon nanotubes (CNTs), and fullerene. Examples of the shape of the conductive agent include a powdery form and a fibrous form. As the conductive agent, one of these materials may be used alone, or two or more kinds thereof may be used in mixture. Moreover, these materials may be composited and used. For example, a composite material of carbon black and a CNT may be used. Among the above, carbon black is preferable and acetylene black is particularly preferable from the viewpoint of electron conductivity and coatability.

The content of the conductive agent in the positive electrode active material layer is preferably 1% by mass or more and 10% by mass or less, and more preferably 3% by mass or more and 9% by mass or less. When the content of the conductive agent is set to be within the above range, the energy density of the energy storage device can be increased.

Examples of the binder include thermoplastic resins such as fluororesins (polytetrafluoroethylene (PTFE), polyvinylidene fluoride (PVDF), or the like), polyethylene, polypropylene, polyacrylate, and polyimide; elastomers such as ethylene-propylene-diene rubber (EPDM), sulfonated EPDM, styrene-butadiene rubber (SBR), and fluororubber; and polysaccharide polymers.

The content of the binder in the positive electrode active material layer is preferably 1% by mass or more and 10% by mass or less, and more preferably 3% by mass or more and 9% by mass or less. When the content of the binder is set to be within the above range, the positive electrode active material can be stably held.

Examples of the thickener include polysaccharide polymers such as carboxymethyl cellulose (CMC) and methyl cellulose. When the thickener has a functional group that reacts with lithium or the like, the functional group may be deactivated in advance by methylation or the like. When a thickener is used, the content of the thickener in the positive electrode active material layer can be 0.1% by mass or more and 8% by mass or less, and is usually preferably 5% by mass or less and more preferably 2% by mass or less. The technique disclosed herein can be preferably implemented in an aspect in which the positive electrode active material layer does not contain a thickener.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica or synthetic substances thereof. When a filler is used, the content of the filler in the positive electrode active material layer can be 0.1% by mass or more and 8% by mass or less, and is usually preferably 5% by mass or less and more preferably 2% by mass or less. The technique disclosed herein can be preferably implemented in an aspect in which the positive electrode active material layer does not contain a filler.

The positive electrode active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Nb, and W, as the constituents other than the positive electrode active material, the conductive agent, the binder, the thickener, and the filler.

### (Negative electrode)

As described above, the negative electrode has a negative electrode substrate and negative electrode active material layers laminated on both surfaces of the negative electrode substrate. The negative electrode may further have an intermediate layer provided between the negative electrode substrate and the negative electrode active material layer. In addition, a negative electrode in which the negative electrode active material layer is laminated on only one surface of the negative electrode substrate can also be used. The configuration of the intermediate layer which may be provided in the negative electrode is not particularly limited, and can be selected from, for example, the configurations exemplified for the positive electrode.

The negative electrode substrate has conductivity. As the material of the negative electrode substrate, a metal such as copper, nickel, stainless steel, nickel-plated steel, or aluminum, an alloy thereof, a carbonaceous material, or the like is used. Among the above, copper or a copper alloy is preferable. Examples of the negative electrode substrate include a foil, a vapor-deposited film, a mesh, and a porous material, and a foil is preferable from the viewpoint of cost. Therefore, a copper foil or a copper alloy foil is preferable as the negative electrode substrate. Examples of the copper foil include a rolled copper foil and an electrolytic copper foil.

The average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative electrode substrate is set to be within the above range, the energy density per volume of the energy storage device can be increased while increasing the strength of the negative electrode substrate.

The negative electrode active material layer contains a negative electrode active material. The negative electrode active material layer contains, as necessary, optional constituents such as a conductive agent, a binder, a thickener, and a filler. The optional constituents such as a conductive agent, a binder, a thickener, and a filler can be selected from the materials exemplified for the positive electrode.

The negative electrode active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Ta, Hf, Nb, and W, as the constituents other than the negative electrode active material, the conductive agent, the binder, the thickener, and the filler.

The negative electrode active material can be appropriately selected from known negative electrode active materials. As the negative electrode active material for a lithium-ion secondary battery, a material capable of occluding and releasing lithium ions is usually used. Examples of the negative electrode active material include metallic Li; metals or semimetals such as Si and Sn; metal oxides or semimetal oxides such as Si oxides, Ti oxides, and Sn oxides; titanium-containing oxides such as Li₄Ti₅O₁₂, LiTiO₂, and TiNb₂O₇; polyphosphate compounds; silicon carbide; and carbon materials such as graphite and non-graphitic carbon (graphitizable carbon or non-graphitizable carbon). Among these materials, graphite and non-graphitic carbon are preferable. In the negative electrode active material layer, one of these materials may be used alone, or two or more kinds thereof may be used in mixture.

The term "graphite" refers to a carbon material in which the average interplanar spacing (d₀₀₂) of a plane (002) determined by an X-ray diffraction method before charge and discharge or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which the average interplanar spacing (d₀₀₂) of a plane (002) determined by an X-ray diffraction method before charge and discharge or in a discharged state is 0.34 nm or more and 0.42 nm or less. Examples of the non-graphitic carbon include non-graphitizable carbon and graphitizable carbon. Examples of the non-graphitic carbon include resin-derived materials, petroleum pitch or petroleum pitch-derived materials, petroleum coke or petroleum coke-derived materials, plant-derived materials, and alcohol-derived materials.

Here, the term "discharged state" of the carbon material means a state in which discharge is performed such that lithium ions, which can be occluded and released during charge and discharge, are sufficiently released from the carbon material serving as a negative electrode active material. For example, in a half-cell in which a negative electrode containing a carbon material as a negative electrode active material is used as a working electrode and metallic Li is used as a counter electrode, the "discharged state" refers to a state in which an open circuit voltage is 0.7 V or more.

The term "non-graphitizable carbon" refers to a carbon material in which the d₀₀₂ is 0.36 nm or more and 0.42 nm or less.

The term "graphitizable carbon" refers to a carbon material in which the d₀₀₂ is 0.34 nm or more and less than 0.36 nm.

The negative electrode active material is usually in the form of particles (powder). The average particle size of the negative electrode active material can be, for example, 1 nm or more and 100 µm or less. When the negative electrode active material is a carbon material, a titanium-containing oxide, or a polyphosphate compound, the average particle size thereof may be 1 µm or more and 100 µm or less. When the negative electrode active material is Si, Sn, an Si oxide, an Sn oxide, or the like, the average particle size thereof may be 1 nm or more and 1 µm or less. When the average particle size of the negative electrode active material is set to be equal to or more than the lower limit, the negative electrode active material is easily produced or handled. When the average particle size of the negative electrode active material is set to be equal to or less than the upper limit, the electron conductivity of the negative electrode active material layer is improved. In order to obtain powder having a predetermined particle size, a pulverizer, a classifier, or the like is used. A method of pulverization and a method of classification can be selected from, for example, the methods exemplified for the positive electrode. When the negative electrode active material is a metal such as metallic Li, the negative electrode active material layer may be in a foil form.

The content of the negative electrode active material in the negative electrode active material layer is preferably 60% by mass or more and 99% by mass or less, and more preferably 90% by mass or more and 98% by mass or less. When the content of the negative electrode active material is set to be within the above range, both high energy density and productivity of the negative electrode active material layer can be achieved. When the negative electrode active material is metallic Li, the content of the negative electrode active material in the negative electrode active material layer may be 99% by mass or more, and may be 100% by mass.

### (Separator)

Since the configuration of the separator can be the same as that of the above-described separator extension portion 37, description thereof will be omitted.

### (Electrolytic solution)

The electrolytic solution can be appropriately selected from known electrolytic solutions. As the electrolytic solution, a non-aqueous electrolytic solution can be suitably used. The non-aqueous electrolytic solution contains a non-aqueous solvent and an electrolyte salt dissolved in the non-aqueous solvent.

The non-aqueous solvent can be appropriately selected from known non-aqueous solvents. Examples of the non-aqueous solvent include cyclic carbonates, linear carbonates, carboxylic acid esters, phosphoric acid esters, sulfonic acid esters, ethers, amides, and nitriles. As the non-aqueous solvent, those obtained by substituting a part of hydrogen atoms contained in these compounds with a halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among the above, EC is preferable.

Examples of the linear carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among the above, EMC is preferable.

As the non-aqueous solvent, a cyclic carbonate or a linear carbonate is preferably used, and a cyclic carbonate and a linear carbonate are more preferably used in combination. By using a cyclic carbonate, dissociation of the electrolyte salt can be promoted to improve the ion conductivity of the non-aqueous electrolytic solution. By using a linear carbonate, the viscosity of the non-aqueous electrolytic solution can be suppressed to be low. When a cyclic carbonate and a linear carbonate are used in combination, the volume ratio of the cyclic carbonate to the linear carbonate (cyclic carbonate:linear carbonate) is preferably, for example, in the range of 5:95 to 50:50.

The electrolyte salt can be appropriately selected from known electrolyte salts. Examples of the electrolyte salt include a lithium salt, a sodium salt, a potassium salt, a magnesium salt, and an onium salt. Among the above, a lithium salt is preferable.

Examples of the lithium salt include inorganic lithium salts such as LiPF₆, LiPO₂F₂, LiBF₄, LiClO₄, and LiN(SO₂F)₂; lithium oxalate salts such as lithium bis(oxalato)borate (LiBOB), lithium difluoro(oxalato)borate (LiFOB), and lithium bis(oxalate)difluorophosphate (LiFOP); and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among the above, inorganic lithium salts are preferable, and LiPF₆ is more preferable.

The content of the electrolyte salt in the non-aqueous electrolytic solution is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less, at 20°C and 1 atm. When the content of the electrolyte salt is set to be within the above range, the ion conductivity of the non-aqueous electrolytic solution can be increased.

The non-aqueous electrolytic solution may contain an additive in addition to the non-aqueous solvent and the electrolyte salt. Examples of the additive include halogenated carbonate esters such as fluoroethylene carbonate (FEC) and difluoroethylene carbonate (DFEC); oxalate salts such as lithium bis(oxalato)borate (LiBOB), lithium difluoro(oxalato)borate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the above aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, tetrakis(trimethylsilyl)titanate, lithium monofluorophosphate, and lithium difluorophosphate. One of these additives may be used alone, or two or more kinds thereof may be used in mixture.

The content of the additive contained in the non-aqueous electrolytic solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the mass of the whole non-aqueous electrolytic solution. When the content of the additive is set to be within the above range, the capacity retention performance or cycle performance after high-temperature storage can be improved, and the safety can be further improved.

### <Energy storage apparatus>

The energy storage device of the present embodiment can be mounted as an energy storage unit (battery module) configured by assembling a plurality of energy storage devices on a power source for automobiles such as electric vehicles (EV), hybrid vehicles (HEV), and plug-in hybrid vehicles (PHEV), a power source for electronic devices such as personal computers and communication terminals, a power source for power storage, or the like. In this case, the technique of the present invention may be applied to at least one energy storage device included in the energy storage unit.

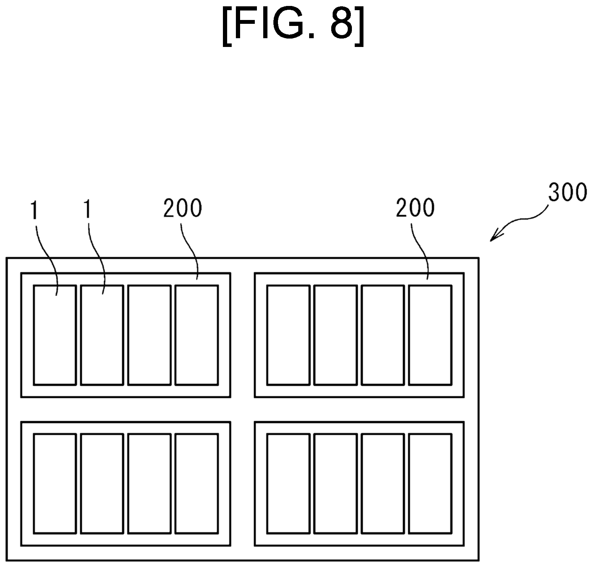

FIG. 8 illustrates an example of an energy storage apparatus 300 in which energy storage units 200 in each of which two or more electrically connected energy storage devices 1 are assembled are further assembled. The energy storage apparatus 300 may include a bus bar (not illustrated) that electrically connects two or more energy storage devices 1, a bus bar (not illustrated) that electrically connects two or more energy storage units 200, and the like. The energy storage unit 200 or the energy storage apparatus 300 may include a state monitoring device (not illustrated) that monitors a state of one or more energy storage devices.

### [Method for producing energy storage device]

A method for producing an energy storage device of the present embodiment can be appropriately selected from known methods. The production method includes, for example, preparing a plurality of electrode bodies, laminating an isolation layer on each of outermost surfaces of the plurality of electrode bodies to prepare a plurality of electrode body units, preparing an electrolytic solution, and accommodating the plurality of electrode body units and the electrolytic solution in a container. Preparing the electrode body includes preparing a positive electrode and a negative electrode, and laminating or winding the positive electrode and the negative electrode with a separator interposed therebetween to form the electrode body. Laminating the isolation layer on each of the outermost surfaces of the plurality of electrode bodies to prepare the plurality of electrode body units may be forming the plurality of electrode body units by winding, around each of the plurality of electrode bodies, a separator extension portion connected to or integrated with the separator forming each of the plurality of electrode bodies.

Accommodating the electrolytic solution in the container can be appropriately selected from known methods. For example, when a non-aqueous electrolytic solution is used as the electrolytic solution, the non-aqueous electrolytic solution may be injected from an injection port formed in the container, and then the injection port may be sealed.

### [Other embodiments]

The energy storage device of the present invention is not limited to the above-described embodiment, and various modifications may be made without departing from the scope of the present invention. For example, to the configuration of an embodiment, the configuration of another embodiment can be added, and a part of the configuration of an embodiment can be replaced with the configuration of another embodiment or a well-known technique. Furthermore, a part of the configuration of an embodiment can be deleted. In addition, a well-known technique can be added to the configuration of an embodiment.

In the above-described embodiment, the case where the energy storage device is used as a chargeable and dischargeable non-aqueous electrolytic solution secondary battery (for example, a lithium-ion secondary battery) has been described, but the energy storage device may be of any type, shape, size, and capacity. The present invention can also be applied to various secondary batteries, capacitors such as electric double layer capacitors and lithium-ion capacitors, and energy storage devices using an electrolytic solution other than a non-aqueous electrolytic solution.

In the above-described embodiment, the electrode body in which the positive electrode and the negative electrode are laminated with the separator interposed therebetween has been described, but the electrode body may not include a separator. For example, the positive electrode and the negative electrode may be in direct contact with each other in a state where a non-conductive layer is formed on the active material layer of the positive electrode or the negative electrode.

In the above-described embodiment, the case where the electrode body is a wound electrode body has been described, but the electrode body may be a laminated electrode body in which a positive electrode and a negative electrode are laminated.

In the above-described embodiment, the case where the two electrode body units have the same configuration has been described, but the configurations of the electrode body units, such as the thickness of the isolation layer, may be different from each other.

In the above-described embodiment, the case where the isolation layer is formed by the separator extension portion connected to the end portion of the separator constituting the electrode body in the longitudinal direction has been described, but the present invention is not limited to this configuration. The isolation layer may be formed by, for example, interposing an insulating resin plate between the electrode bodies. Moreover, in the above-described embodiment, the case where the isolation layer is formed by the separator extension portion of one separator constituting the electrode body has been described, but the isolation layer may be formed by separator extension portions of a plurality of separators.

In the above-described embodiment, the case where the configurations of the separator and the separator extension portion constituting the electrode body coincide with each other has been described, but the configurations of the separator and the separator extension portion constituting the electrode body may be different from each other. That is, the separator constituting the electrode body may be freely selected from known separators. In the example illustrated in FIG. 5, the case where the isolation layer is formed by winding the separator extension portion twice (that is, one isolation layer has two resin layers and two inorganic layers) has been described, but the present invention is not limited to this configuration. For example, the isolation layer may be formed by winding the separator extension portion three times or more (for example, three times or more and five times or less). One isolation layer may have three or more resin layers and three or more inorganic layers (for example, three or more layers and five or less layers). Since one isolation layer has three or more resin layers and three or more inorganic layers as described above, when the temperature of the energy storage device becomes high to the extent that the safety valve is operated, the electrode body unit having the isolation layer can be stably welded to the adjacent electrode body unit.

In the above-described embodiment, the case where the energy storage device has the two adjacent electrode body units has been described, but the energy storage device may have three or more adjacent electrode body units. However, as in the above-described embodiment, the case where the number of the electrode body units included in the energy storage device is two is preferable from the viewpoint that all the electrode body units are more reliably welded to each other at a high temperature (eventually, it is possible to prevent any one of the electrode body units from being attracted to the safety valve and the flow path of gas from being blocked).

In the above-described embodiment, the case where one safety valve is provided in the container has been described, but a plurality of safety valves may be provided in the container.

In the above-described embodiment, the case where the separator extension portion forming the isolation layer of the electrode body unit has the resin layer and the inorganic layer has been described, but the isolation layer or the separator extension portion may have any layer other than the resin layer and the inorganic layer or any configuration.

In the above-described embodiment, the case where the resin layer is located on the outermost surface of the isolation layer has been described, but the inorganic layer may be located on the outermost surface of the isolation layer.

### Examples

Hereinafter, the present invention will be described more specifically with reference to examples. The present invention is not limited to the following examples.

### <Example 1>

### (Preparation of positive electrode)

A lithium transition metal composite oxide having an α-NaFeO₂-type crystal structure and represented by LiNi_{0.6}Co_{0.2}Mn_{0.2}O₂ was used as a positive electrode active material. A positive electrode mixture paste containing the above positive electrode active material, acetylene black (AB) as a conductive agent, and polyvinylidene fluoride (PVDF) as a binder at a mass ratio (in terms of solid content) of 93:4:3, and containing N-methylpyrrolidone (NMP) as a dispersion medium was prepared. The above positive electrode mixture paste was applied to an aluminum foil as a positive electrode substrate, dried, and then pressed to prepare a positive electrode in which a positive electrode active material layer is laminated on the positive electrode substrate.

### (Preparation of negative electrode)

A negative electrode mixture paste containing graphite as a negative electrode active material, styrene-butadiene rubber (SBR) as a binder, and carboxymethyl cellulose (CMC) as a thickener at a mass ratio (in terms of solid content) of 98:1:1, and containing water as a dispersion medium was prepared. The above negative electrode mixture paste was applied to a copper foil as a negative electrode substrate, dried, and then pressed to prepare a negative electrode in which a negative electrode active material layer is laminated on the negative electrode substrate.

### (Preparation of non-aqueous electrolytic solution)

A non-aqueous electrolytic solution was prepared by dissolving LiPF₆ at a concentration of 1.0 mol/dm³ (at 20°C and 1 atmosphere) in a mixed solvent obtained by mixing ethylene carbonate (EC), dimethyl carbonate (DMC), and ethyl methyl carbonate (EMC) at a volume ratio of 30:35:35.

### (Preparation of energy storage device)

A separator obtained by laminating an inorganic layer containing aluminum oxide as a main constituent on one surface of a polyolefin microporous film (resin layer) was used as the separator. The average thickness of the polyolefin microporous film was 7 µm, and the average thickness of the inorganic layer was 3 µm. The positive electrode and the negative electrode were laminated with the separator interposed therebetween to prepare a wound electrode body. In addition, a separator extension portion integrated with the separator and having the same configuration as that of the separator was further wound so as to surround the electrode body, thereby preparing an electrode body unit having an isolation layer formed of the separator extension portion. At this time, the number of times the separator extension portion is wound was adjusted such that the thickness of the isolation layer is 30 µm.

Two of the electrode body units were prepared and accommodated in a container made of aluminum, which has a safety valve. At this time, the electrode body units were arranged such that wide surface portions of the electrode body units are in contact with each other, and the total thickness of the isolation layers that separate the electrode bodies of the two electrode body units from each other was set to 60 µm. Thereafter, the non-aqueous electrolytic solution was injected into the container, and then the container was sealed to obtain an energy storage device of Example 1.

### <Examples 2 and 3, and Comparative Examples 1 and 2>

Each of energy storage devices of Examples 2 and 3, and Comparative Examples 1 and 2 was obtained in the same manner as in Example 1, except that the total thickness of the isolation layers that separate the electrode bodies of the two electrode body units from each other was set as shown in Table 1.

### <Comparative Examples 3 and 4>

Each of energy storage devices of Comparative Examples 3 and 4 was obtained in the same manner as in Example 1, except that a separator formed of only a polyolefin microporous film (resin layer) was used, and the total thickness of the isolation layers that separate the electrode bodies of the two electrode body units from each other was set as shown in Table 1.

### <Evaluation>

For each of the obtained energy storage devices, the safety valve was operated by heating using a heater arranged outside the container. Thereafter, each of the energy storage devices was disassembled, and a positional deviation between the two electrode body units was measured. The measurement results are shown in Table 1.

In addition, the insulating property between the electrode bodies of the two electrode body units was evaluated by AC resistance measurement using an alternating current at a frequency of 100 kHz. When the AC resistance between the two electrode bodies was 1.0 kΩ or more, the insulating property was determined to be high, and when the AC resistance was less than 1.0 kΩ, the insulating property was determined to be low. The evaluation results are shown in Table 1.

**[Table 1]**

| | TOTAL THICKNESS OF ISOLATION LAYERS [µm] | TOTAL THICKNESS OF RESIN LAYERS [µm] | TOTAL THICKNESS OF INORGANIC LAYERS [µm] | PRESENCE OR ABSENCE OF INORGANIC LAYER | POSITIONAL DEVIATION AT TIME OF OPERATION OF SAFETY VALVE IS 1 mm OR LESS | INSULATING PROPERTY BETWEEN ELECTRODE BODIES |
|---|---|---|---|---|---|---|
| COMPARATIVE EXAMPLE 1 | 40 | 28 | 12 | PRESENT | NO | LOW |
| EXAMPLE 1 | 60 | 42 | 18 | PRESENT | YES | HIGH |
| EXAMPLE 2 | 80 | 56 | 24 | PRESENT | YES | HIGH |
| EXAMPLE 3 | 100 | 70 | 30 | PRESENT | YES | HIGH |
| COMPARATIVE EXAMPLE 2 | 120 | 84 | 36 | PRESENT | NO | HIGH |
| COMPARATIVE EXAMPLE 3 | 80 | 80 | 0 | ABSENT | YES | LOW |
| COMPARATIVE EXAMPLE 4 | 160 | 160 | 0 | ABSENT | YES | LOW |

As shown in Table 1, in Comparative Example 1, since the isolation layer was too thin, the insulating property between the electrode bodies was low. In addition, the positional deviation at the time of operation of the safety valve exceeded 1 mm, and the electrode body units could not be welded to each other. In Comparative Examples 3 and 4, since the isolation layer did not have an inorganic layer, the insulating property between the electrode bodies was low. In Comparative Example 2, although the isolation layer had the inorganic layer, the isolation layer was too thick, so that the positional deviation at the time of operation of the safety valve exceeded 1 mm, and the electrode body units could not be welded to each other. On the other hand, in Examples 1 to 3, the isolation layer had the inorganic layer, and the total thickness of the isolation layers was within an appropriate range. Therefore, the positional deviation at the time of operation of the safety valve was equal to or less than 1 mm, and the electrode body units could be welded to each other. Furthermore, the insulating property between the electrode bodies was high.

From the above, it was shown that when the isolation layers that separate the electrode bodies from each other have the resin layers and the inorganic layers, and the total thickness of the isolation layers is within an appropriate range, gas can be effectively discharged at the time of operation of the safety valve while ensuring the insulating property between the electrode bodies.

### INDUSTRIAL APPLICABILITY

The present invention can be applied to energy storage devices used as power sources of electronic devices such as personal computers and communication terminals, automobiles, and the like.

### DESCRIPTION OF REFERENCE NUMERALS

1 Energy storage device
10a, 10b Electrode body unit
20 Container
21 Container main body
22 Lid body
23 Safety valve
23a Weakened portion
23b Groove portion
30a, 30b Electrode body
31 Positive electrode terminal
32 Negative electrode terminal
33 Positive electrode
34 First separator
35 Negative electrode
36 Second separator
37 Separator extension portion
371 Resin layer
372 Inorganic layer
38 Positive electrode substrate
39 Positive electrode active material layer
40 Negative electrode substrate
41 Negative electrode active material layer
42 Positive electrode active material layer non-laminated portion
43 Negative electrode active material layer non-laminated portion
44 Curved surface portion
45 Wide surface portion
51 Positive electrode-side connection member
52 Positive electrode external terminal
53 Negative electrode-side connection member
54 Negative electrode external terminal
60a, 60b Isolation layer
200 Energy storage unit
300 Energy storage apparatus
B Boundary
d1, d2 Thickness
d Total thickness
S1, S2 Virtual plane
S3 Extension surface
W1, W2 Winding axis

## Claims

1. An energy storage device comprising:
a plurality of electrode body units each having an electrode body in which a positive electrode and a negative electrode are laminated, and an isolation layer laminated on an outermost surface of the electrode body; and
a container accommodating the plurality of electrode body units and having a safety valve, wherein
the plurality of electrode body units adjacent to each other are in contact with each other at the isolation layers,
the isolation layer includes a resin layer and an inorganic layer, and
a total thickness of the isolation layers that separate the electrode bodies in the plurality of electrode body units adjacent to each other is 50 µm or more and 110 µm or less.

2. The energy storage device according to claim 1, wherein the electrode body is a wound electrode body having a shape including two curved surface portions and a pair of wide surface portions located between the two curved surface portions, and the plurality of electrode body units adjacent to each other are in contact with each other at the isolation layers laminated on the wide surface portions.

3. The energy storage device according to claim 2, wherein at least one of the two curved surface portions faces an inner surface of the container in which the safety valve is arranged.

4. The energy storage device according to claim 3, wherein the safety valve is located on an extension surface of a contact surface between the plurality of electrode body units adjacent to each other.

5. The energy storage device according to any one of claims 1 to 4, wherein a thickness of the inorganic layer is 10% or more and 40% or less of a thickness of the isolation layer.
